# EUROPEAN PATENT APPLICATION

(11) **EP 3 576 320 A1**
(43) Date of publication of application: **04.12.2019**
(21) Application number: 18305650.6
(22) Date of filing: 29.05.2018
(51) Int. Cl.: H04B 10/50, H04B 10/272

(54) **MULTIPLE WAVELENGTH LASER AND PERIODIC OPTICAL FILTER -BASED TRANSMITTER**

(71) Applicant: Nokia Solutions and Networks Oy, 02610 Espoo (FI)
(72) Inventor: GALLET, Antonin, 75014 PARIS (FR); SHEN, Alexandre, 91400 ORSAY (FR)
(74) Representative: Novagraaf Technologies

(57) **Abstract**

The present invention relates to an optical transmitter (100) comprising:
- a multiple wavelength laser (200) configured to generate and deliver a multiplexed optical signal (OS) comprising k optical signals comprising different k wavelengths according to a comb of wavelengths having a predefined channel spacing (Δλₗₐₛₑᵣ) between the different wavelengths, k being an integer;
- a periodic optical filter (300) configured to receive the multiplexed optical signal (OS) and filter the wavelengths of the multiplexed optical signal (OS) according to a predetermined filter wavelength distribution, and
- an output (110) configured to receive and send the filtered multiplexed optical signal (FOS) obtained out of the optical transmitter (100).

The free spectral range distribution of the predetermined filter wavelength distribution (Δλ_{filter}) is designed to fit with the predefined channel spacing (Δλₗₐₛₑᵣ) or reciprocally. Such optical transmitter is compact, easy to implement, low-cost and generates a low power-consumption multi-wavelength source that has sufficient reach and large enough extinction ratio.

## Description

### Technical Field

Various example embodiments relate to a multi-wavelength transmitter for Wavelength Division Multiplexing Passive Optical Networks (WDM PON) and associated method to produce such a transmitter. The transmitter can also be used in Metropolitan networks or in datacenters.

### Background

Wavelength Division Multiplexer Passive Optical Networks (WDM PON) and metropolitan networks require multi-wavelength sources that have sufficient reach and large-enough extinction ratio. The extinction ratio is an important parameter to guarantee a propagation distance of the optical signal without error (i.e. reach), which conditions the use of a transmitter in a network whose size gives the necessary "reach". For example, in a metropolitan network, the reach is typically set at 50 km for an average metropolis, and at 80 km for a megapole.

Such Networks comprise an Optical Line Terminal (OLT) that emits a serie of optical signal having different wavelengths, each of them being modulated at a given bit-rate.

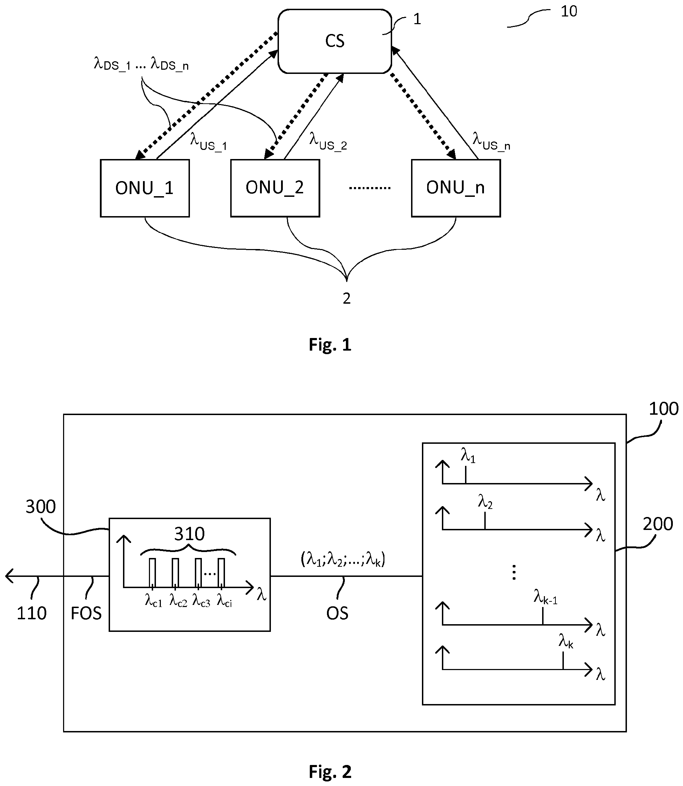

**Figure** 1 illustrates a classical Passive Optical Network (PON) 10. The PON 10 comprises a Central Station (CS) 1 which is linked to multiple Optical Network Units (ONU) 2, ONU_i, wherein i is an integer comprised between 1 and n, n corresponding to the number of users, like Internet subscribers for example. The previously mentioned OLT is housed inside the CS.

The Central Station 1 sends a downstream signal which is a multiplexed signal containing multiple wavelengths λ_{DS_i}. Each wavelength λ_{DS_i} corresponds to the downstream signal intended for the corresponding ONU_i, in response to an upstream signal λ_{US_i} which sends information requests or payload data.

Photonic integrated circuits using Electro-absorption Modulator Lasers (EML) offer multi-wavelength sources. However, these transmitters have a lower output power level due to excess loss caused by the Electro Absorption Modulators (EAM), higher power consumption due to EAM bias, a larger footprint and a limited optical passband which is inherent to the electroabsorption effect (sharp excitonic absorption spectrum).

In fact, each EML emits and modulates light for one single wavelength, addressing one of the WDM grid. The presence of EAMs nearly doubles the number of photonic devices, this makes the electrical wiring scheme more complicated on the photonic chipset layout, thus augmenting its size. A multiplexer is then needed to recombine all the wavelengths, thus further increasing the size of the chipset.

So there is a need for a compact, easy to implement, low-cost and low power-consumption multi-wavelength source that has sufficient reach and large enough extinction ratio.

### Summary

Various example embodiments propose an optical transmitter and associated method to produce such a transmitter to solve the prior art drawbacks.

In a first and general embodiment, the optical transmitter comprises:
- a multiple wavelength laser configured to generate and deliver a multiplexed optical signal comprising k optical signals having k different wavelengths (or channels) according to a comb of wavelengths having a predefined channel spacing between the different wavelengths, k being an integer;
- a periodic optical filter configured to receive the multiplexed optical signal and filter the wavelengths of the multiplexed optical signal according to a predetermined filter wavelength distribution, and
- an output configured to receive and send the filtered multiplexed optical signal obtained out of the optical transmitter,
wherein
the free spectral range distribution of the predetermined filter wavelength distribution is designed to fit with the predefined channel spacing or reciprocally, wherein the predefined channel spacing is designed to fit with the free spectral range distribution of the predetermined filter wavelength distribution.

Specific features or embodiments of the optical transmitter, usable alone or in combination (provided that there is no conflict between the different elements) are:
a first heater configured to shift the predetermined filter wavelength distribution respectively to the comb of wavelengths generated by the multiple wavelength laser and thus permitting the enhancement of the extinction ratio of the filtered multiplexed optical signal on each filtered wavelength;
a second heater configured to shift the comb of wavelengths respectively to the predetermined filter wavelength distribution and thus permitting the enhancement of the extinction ratio of the filtered multiplexed optical signal on each filtered wavelength;
the periodic optical filter is one of an extra-cavity ring resonator, a Fabry-Perot resonator or a Mach-Zehnder resonator;
the multiple wavelength laser comprises an array of gain sections providing gain for the lasing of the optical signals at the k different wavelengths, the gain sections coming from a substrate containing III-V elements, the gain sections also containing Radio Frequence - RF - electrodes configured to directly modulate each gain section so as to code payload signals on each wavelength of the comb of wavelengths; and/or
the multiple wavelength laser and the periodic optical filter are integrated on the same chip.

Other various example embodiments propose a method to produce a reliable optical transmitter comprising:
- a laser designing step wherein a multiple wavelength laser is designed to generate and deliver a multiplexed optical signal comprising k optical signals having k different wavelengths according to a comb of wavelengths having a predefined channel spacing between the different wavelengths, k being an integer;
- a filter designing step wherein a periodic optical filter is designed to receive the multiplexed optical signal and to filter the wavelengths of the multiplexed optical signal according to a predetermined filter wavelength distribution;
wherein
the free spectral range distribution of the predetermined filter wavelength distribution is designed to fit with the predefined channel spacing or reciprocally, wherein the predefined channel spacing is designed to fit with the free spectral range distribution of the predetermined filterd wavelength distribution.

Specific features or embodiments of the method, usable alone or in combination (provided that there is no conflict between the different elements) are:
a first adjusting step wherein the predetermined filter wavelength distribution is shifted, by a first heater, respectively to the comb of wavelengths generated by the multiple wavelength laser so as to permit the enhancement of the extinction ratio of the filtered multiplexed optical signal on each filtered wavelength;
a second adjusting step wherein the comb of wavelengths is shifted, by a second heater, respectively to the predetermined filter wavelength distribution so as to permit the enhancement of the extinction ratio of the filtered multiplexed optical signal on each filtered wavelength; and/or
a coding step, before the filter designing step, wherein when the multiple wavelength laser comprises an array of gain sections providing gain for the lasing of the optical signals at the k different wavelengths, the gain sections coming from a substrate containing III-V elements, and the gain sections also containing Radio Frequence - RF - electrodes, the RF electrodes are configured to directly modulated each gain section so as to code payload signals on each wavelength of the comb of wavelengths.

### Brief Description of the Drawings

Some embodiments of apparatus and method are now described, by way of example only, and with reference to the accompagnying drawings, in which :
- Figure 1 schematically illustrates a classical Passive Optical Network (PON);
- Figure 2 schematically illustrates a first embodiment of an optical transmitter;
- Figure 3 schematically illustrates the spectral diagram of an optical signal generated and delivered by a multiple wavelength laser;
- Figure 4 schematically illustrates the spectral diagram of a periodic optical filter;
- Figure 5 schematically illustrates how the optical transceiver of figure 2 spectrally operates;
- Figure 6 schematically illustrates a second embodiment of an optical transmitter;
- Figure 7 schematically illustrates a third embodiment of an optical transmitter;
- Figures 8a and 8b schematically illustrate two example of synoptics of a method to produce a reliable optical transmitter.

### Description of Embodiments

**Figure 2** illustrates a first and general embodiment of an optical transmitter 100.

The optical transmitter 100 comprises a multiple wavelength laser 200, a periodic optical filter 300 and an output 110.

The multiple wavelength laser 200, is configured to generate and deliver a multiplexed optical signal OS comprising k optical signals having k different wavelengths (or channels), λ₁ to λₖ wherein k is an integer, according to a comb of wavelengths having a predefined channel spacing Δλₗₐₛₑᵣ between the different wavelengths.

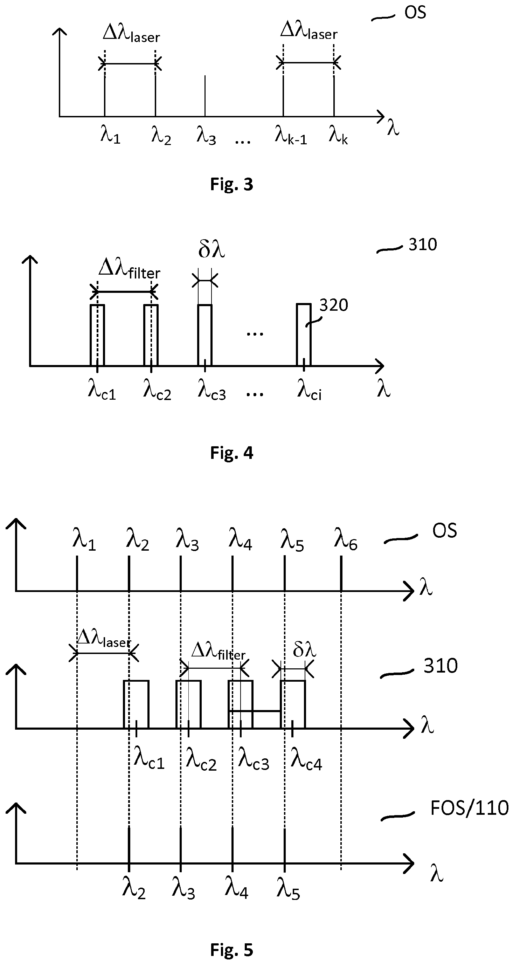

That is |λ₂ - λ₁| = Δλₗₐₛₑᵣ, |λ₃ - λ₂| = Δλₗₐₛₑᵣ, ..., |λₖ - λₖ₋₁| = Δλₗₐₛₑᵣ as illustrated in **Figure 3** which represents the spectral diagram of the multiplexed optical signal OS.

For example, the multiple wavelength laser 200 can be an arrayed waveguide grating - AWG - laser or a set of k individual lasers wherein each individual laser be configured to generate and deliver an optical signal, the k individual optical signals being multiplexed together by a multiplexer generating the multiplexed optical signal OS.

The periodic optical filter 300 is configured to receive the multiplexed optical signal OS and filter the wavelengths of the multiplexed optical signal OS according a predetermined filter wavelength distribution 310.

**Figure 4** illustrates the spectral diagram of the periodic optical filter 300 which corresponds to the predetermined filter wavelength distribution 310.

The predetermined filter wavelength distribution 310 comprises i filtering windows 320 around central wavelengths λ_{c1} to λ_{ci}, wherein i is an integer. Each filtering windows has a width of δλ. The free spectral range distribution of the predetermined filter wavelength distribution Δλ_{filter} corresponds to the difference between to consecutive λ_{ci} wavelengths.

The output 110 is configured to receive and send the filtered multiplexed optical signal FOS obtained out of the optical transmitter 100.

So that the optical transmitter 100 delivers a filtered multiplexed optical signal FOS with sufficient reach and a large enough extinction ratio, the free spectral range distribution of the predetermined filter wavelength distribution Δλ_{filter} is designed to fit with the predefined channel spacing Δλₗₐₛₑᵣ or reciprocally, wherein the predefined channel spacing Δλₗₐₛₑᵣ is designed to fit with the free spectral range distribution of the predetermined filter wavelength distribution Δλ_{filter}.

The terms "fit with" mean that the free spectral range distribution of the predetermined filter wavelength distribution Δλ_{filter} have to be an integer multiple of the predefined channel spacing Δλₗₐₛₑᵣ or reciprocally, that the predefined channel spacing Δλₗₐₛₑᵣ have to be an integer multiple of the free spectral range distribution of the predetermined filter wavelength distribution Δλ_{filter}.

**Figure 5** illustrates how the optical transceiver 100 spectrally operates.

The top spectral diagram represents the multiplexed optical signal OS which, in this example, comprises six wavenlength λ₁ to λ₆ (k = 6). The central spectral diagram represents the predetermined filter wavelength distribution 310 of the periodic optical filter 300. In this example, the predetermined filter wavelength distribution 310 has four filtering windows 320 centered around four central wavelengths λ_{c1} to λ_{c4} (i = 4). The bottom spectral diagram represents the filtered multiplexed optical signal FOS obtained after the periodic optical filter 300. This filtered multiplexed optical signal FOS comprises the four wavelengths that successfully passed through the periodic optical filter 300.

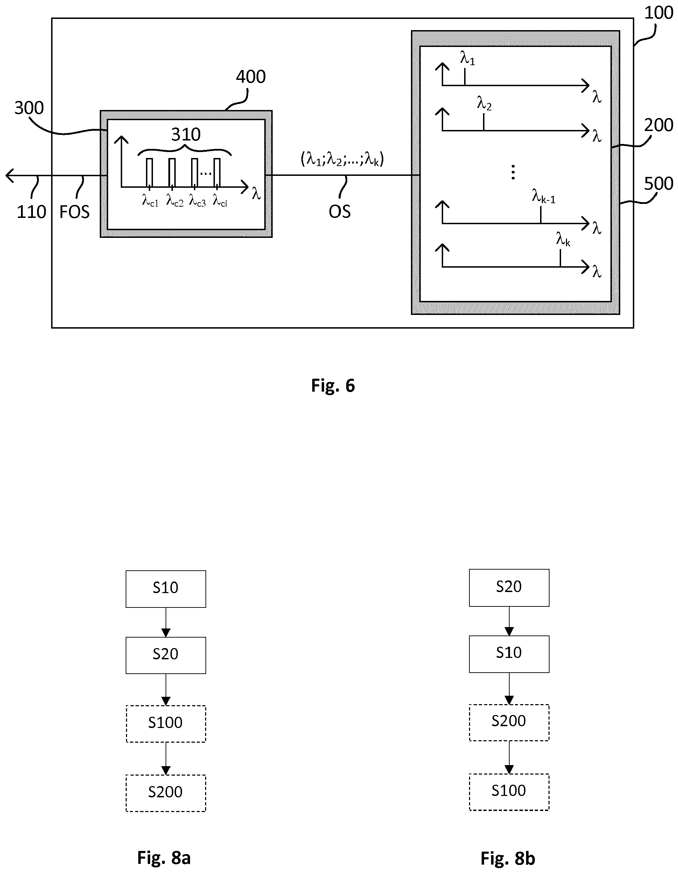

**Figure 6** illustrates a second embodiment of an optical transmitter.

In this second embodiment, the optical transceiver 100 further comprises a first heater 400 configured to shift the predetermined filter wavelength distribution 310 respectively to the comb of wavelengths generated by the multiple wavelength laser 200 thus permitting the enhancement of the extinction ratio of the filtered multiplexed optical signal FOS on each filtered wavelength. In fact, shifting the predetermined filter wavelength distribution 310 enables to readjust the filtering windows 320 so that the central wavelengths λ_{ci} correspond to the wavelengths λₖ of the multiplexed optical signal OS maximizing the filtering efficiency of the periodic optical filter 300. Advantageously, the first heater 400 is positioned on the periodic optical filter 300.

In the same manner, the optical transceiver 100 may further comprise a second heater 500 configured to shift the comb of wavelengths respectively to the predetermined filter wavelength distribution 310 thus permitting the enhancement of the extinction ratio of the filtered multiplexed optical signal FOS on each filtered wavelength. In fact, shifting the comb of wavelengths enables to readjust the wavelengths λₖ of the multiplexed optical signal OS so that they fit with the filtering windows 320 and advantageously so that the wavelengths λₖ of the multiplexed optical signal OS correspond to the central wavelengths λ_{ci} maximizing the filtering efficiency of the periodic optical filter 300.

Ideally, the multiple wavelength laser 200 and the periodic optical filter 300 are designed so that the predefined channel spacing Δλₗₐₛₑᵣ between the wavelengths of the wavelength comb generated by the multiple wavelength laser 200 corresponds to the free spectral range of the periodic optical filter 300 (i.e. Δλₗₐₛₑᵣ = Δλ_{filter}), and that the laser wavelengths λₖ should be correctly detuned from the resonance wavelength λ_{ci} of the periodic optical filter 300 for all k channels. In reality, fabrication deviations from optimal design always causes a possible mismatch of the "1/FSR" (respectively "1/channel spacing") and of the correct detuning of the periodic optical filter 300 resonance λ_{ci} (respectively to the wavelengths λₖ of the multiple wavelength laser 200), this is the very reason why phase tunings are recommended either on the multiple wavelength laser 200 or on the periodic optical filter 300, or on both.

Advantageously, the periodic optical filter 300 is an extra-cavity ring resonator, a Fabry-Perot resonator or a Mach-Zehnder resonator.

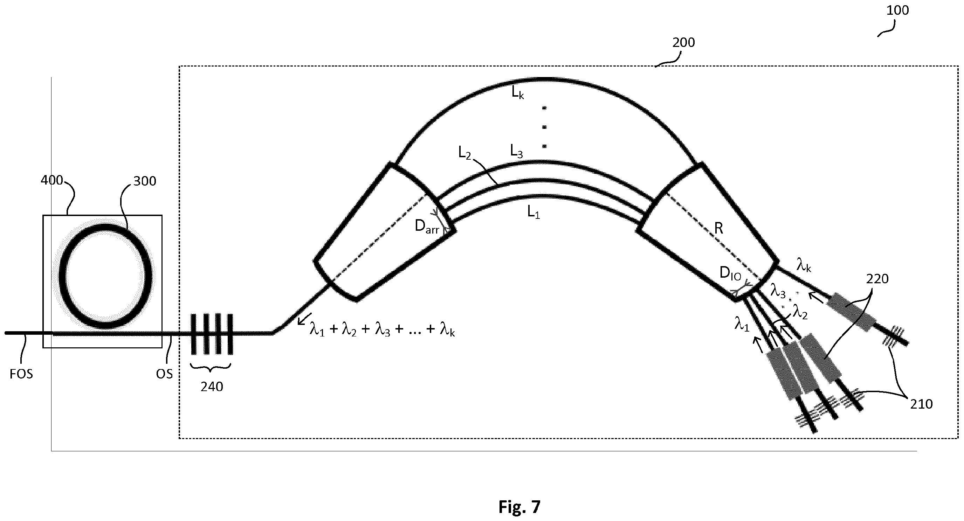

**Figure 7** illustrates a third embodiment of an optical transmitter 100.

In this third embodiment, the structure of the multiple wavelength laser 200 is unique and is composed of an arrayed waveguide grating - AWG - laser.

The AWG-laser 200 comprises k lasers, each laser is composed of a totally-reflecting mirror 210 (for exemple a short band, long Bragg mirror) which represents a starting point of the AWG-laser cavity, followed by an active gain section 220.

The active gain section 220 is composed of III-V material, the bias current of the gain section is modulated by an encoding electrical signal, thus the modulated gain section generates the optical signal at the wavelength λ which is determined by the filtering structure of the AWG.

At the output of the AWG, a broadband mirror 240 closes each of the k laser cavities and constitutes the output of the multiple wavelength laser 200: the output of the AWG-laser is a multiplexed optical signal OS which propagates into the periodic optical filter 300. The broadband mirror 240 can be a short Bragg mirror or a Sagnac-mirror.

So as to easily modify the predefined channel spacing Δλₗₐₛₑᵣ between the different wavelengths, the gain sections 220 can come from a substrate containing III-V elements. The gain sections 220 must also contain Radio Frequence - RF - electrodes configured to directly modulate each gain section 220 so as to code payload signals on each wavelength λ₁ to λₖ of the comb of wavelengths.

In **Figure 7****,** the periodic optical filter 300 is an extra-cavity ring resonator. In this case, the free spectral range distribution of the predetermined filter wavelength distribution Δλ_{filter} is given by the design of the ring resonator, typically, the free spectral range distribution of the predetermined filter wavelength distribution Δλ_{filter} is inversely proportional to the radius of the ring resonator. Hence the ring resonator (ring diameter, the ring waveguide effective index) has to be designed at the same time as the AWG-laser 200.

Advantageouly, to facilitate the shift in wavelength of both predefined channel spacing Δλₗₐₛₑᵣ and predetermined filter wavelength distribution 310 (i.e. the comb of wavelengths) when they are alreadry tuned together, the AWG-laser 200 and the periodic optical filter 300 are integrated on the same chip.

It is to be noted that the second heater 500 is not represented in this embodiment. Given that it should be positioned on the arrayed waveguides of the AWG-laser 200, in the present embodiment illustrated **Figure 7****.**

Various example embodiments of a method to produce a reliable optical transmitter are now described.

In a first and general embodiment, the method comprises
- a laser designing step S10 wherein a multiple wavelength laser, e.g. an arrayed waveguide grating - AWG - laser, is designed to generate and deliver a multiplexed optical signal comprising k optical signals having k different wavelengths according to a comb of wavelengths having a predefined channel spacing between the different wavelengths, k being an integer;
- a filter designing step S20 wherein a periodic optical filter is designed to receive the multiplexed optical signal and to filter the wavelengths of the multiplexed optical signal according to a predetermined filter wavelength distribution;

**Figures 8a and 8b** illustrate two synoptic examples of the method.

In **Figure 8a****,** the laser designing step S10 precedes the filter designing step S20, thus the free spectral range distribution of the predetermined filter wavelength distribution is designed to fit with the predefined channel spacing.

Reciprocally, as shown in **Figure 8b****,** when the filter designing step S20 precedes the laser designing step S10, the predefined channel spacing is designed to fit with the free spectral range distribution of the predetermined filter wavelength distribution.

To maximize the filtering efficiency of the periodic optical filter, the method can further comprise a first adjusting step S200 wherein the predetermined filter wavelength distribution is shifted, by a first heater, respectively to the comb of wavelengths generated by the multiple wavelength laser so as to permit the enhancement of the extinction ratio of the filtered multiplexed optical signal on each filtered wavelength.

According to another option, the method can further comprise a second adjusting step S100 wherein the comb of wavelengths is shifted, by a second heater, respectively to the predetermined filter wavelength distribution so as to permit the enhancement of the extinction ratio of the filtered multiplexed optical signal on each filtered wavelength. As previously explained, shifting the comb of wavelengths generated by the multiple wavelength laser enables to readjust the wavelengths λₖ of the multiplexed optical signal so that they fit with the filtering windows 320 and advantageously so that the wavelengths λₖ of the multiplexed optical signal correspond to the central wavelengths λ_{ci} maximizing the filtering efficiency of the periodic optical filter 300.

The order of the optional steps S100 and S200 is not strict. For example, as shown in **Figure 8a****,** it is more relevant to adjust the comb of wavelengths after the filter designing step S20 and then, optionnaly, adjust the predetermined filter wavelength distribution. Reciprocally, as shown in **Figure 8b****,** it is more relevant to adjust the predetermined filter wavelength distribution after the laser designing step S10, and then, optionnaly, adjust the comb of wavelengths.

In a case wherein the multiple wavelength laser comprises an array of gain sections providing gain for the lasing of the optical signals at the k different wavelengths, the gain sections coming from a substrate containing III-V elements, and the gain sections also containing Radio Frequence - RF - electrodes, the method can advantageously comprise a coding step S110 wherein, the RF electrodes are configured to directly modulate each gain section so as to code payload signals on each wavelength of the comb of wavelengths.

The coding step S110, not represented in **Figures 8a or 8b****,** is performed before the filter designing step S20 so that the periodic filter has the role and function of enhancing the extinction ratio of the modulated optical signals composing the multiplexed optical signal.

Optional steps S100, S200 and S110 can be performed many times until the performance of the optical transmitter is optimal.

The description and drawings merely illustrate the principles of the different optical transmitters and associated method proposed. It will thus be appreciated that those skilled in the art will be able to devise various arrangements that, although not explicitly described or shown herein, embody the principles of the different optical transmitters and associated method proposed and are included within its spirit and scope. Furthermore, all examples recited herein are principally intended expressly to be only for pedagogical purposes to aid the reader in understanding the principles of the different optical transmitters and associated method proposed and the concepts contributed by the inventors to furthering the art, and are to be construed as being without limitation to such specifically recited examples and conditions. Moreover, all statements herein reciting principles, aspects, and embodiments of the different optical transmitters and associated method proposed, as well as specific examples thereof, are intended to encompass equivalents thereof.

## Claims

1. An optical transmitter (100) comprising:
• a multiple wavelength laser (200) configured to generate and deliver a multiplexed optical signal (OS) comprising k optical signals having k different wavelengths according to a comb of wavelengths having a predefined channel spacing (Δλₗₐₛₑᵣ) between the different wavelengths, k being an integer;
• a periodic optical filter (300) configured to receive the multiplexed optical signal (OS) and filter the wavelengths of the multiplexed optical signal (OS) according to a predetermined filter wavelength distribution (310), and
• an output (110) configured to receive and send the filtered optical multiplexed signal (FOS) obtained out of the optical transmitter (100)
wherein
the free spectral range distribution of the predetermined filter wavelength distribution (Δλ_{filter}) is designed to fit with the predefined channel spacing (Δλₗₐₛₑᵣ) or reciprocally, wherein the predefined channel spacing (Δλₗₐₛₑᵣ) is designed to fit with the free spectral range distribution of the predetermined filter wavelength distribution (Δλ_{filter}).

2. The optical transmitter according to claim 1 further comprising a first heater (400) configured to shift the predetermined filter wavelength distribution (310) respectively to the comb of wavelengths generated by the multiple wavelength laser (200) and thus permitting the enhancement of the extinction ratio of the filtered multiplexed optical signal (FOS) on each filtered wavelength.

3. The optical transmitter (100) according to any one of claims 1 to 2 also comprising second heater (500) configured to shift the comb of wavelengths respectively to the predetermined filter wavelength distribution (310) and thus permitting the enhancement of the extinction ratio of the filtered multiplexed optical signal (FOS) on each filtered wavelength.

4. The optical transmitter (100) according to any one of claims 1 to 3 wherein the periodic optical filter (300) is one of an extra-cavity ring resonator, a Fabry-Perot resonator or a Mach-Zehnder resonator.

5. The optical transmitter (100) according to any one of claims 1 to 4 wherein the multiple wavelength laser (200) comprises an array of gain sections (220) providing gain for the lasing of the optical signals at k different wavelengths, the gain sections (220) coming from a substrate containing III-V elements, the gain sections (220) also containing Radio Frequence - RF - electrodes configured to directly modulate each gain section (220) so as to code payload signals on each wavelength of the comb of wavelengths.

6. The optical transmitter (100) according to any one of claims 1 to 5 wherein the multiple wavelength laser (200) and the periodic optical filter (300) are integrated on the same chip.

7. A method to produce a reliable optical transmitter comprising:
• a laser designing step (S10) wherein a multiple wavelength laser is designed to generate and deliver a multiplexed optical signal comprising k optical signals having k different wavelengths according to a comb of wavelengths having a predefined channel spacing between the different wavelengths, k being an integer;
• a filter designing step (S20) wherein a periodic optical filter is designed to receive the multiplexed optical signal and to filter the wavelengths of the multiplexed optical signal according to a predetermined filter wavelength distribution;
wherein
the free spectral range distribution of the predetermined filter wavelength distribution is designed to fit with the predefined channel spacing or reciprocally, wherein the predefined channel spacing is designed to fit with the free spectral range distribution of the predetermined filter wavelength distribution.

8. The method as claimed in claim 7, further comprising a first adjusting step (S200) wherein the predetermined filter wavelength distribution is shifted, by a first heater, respectively to the comb of wavelengths generated by the multiple wavelength laser so as to permit the enhancement of the extinction ratio of the filtered multiplexed optical signal on each filtered wavelength.

9. The method as claimed in any one of claims 7 to 8 further comprising a second adjusting step (S100) wherein the comb of wavelengths is shifted, by a second heater, respectively to the predetermined filter wavelength distribution so as to permit the enhancement of the extinction ratio of the filtered multiplexed optical signal on each filtered wavelength.

10. The method as claimed in claim any one of claims 7 to 9 further comprising a coding step before the filter designing step (S20) wherein when the multiple wavelength laser comprises an array of gain sections providing gain for the lasing of the optical signals at the k different wavelengths, and wherein the gain sections come from a substrate containing III-V elements, the gain sections also contain Radio Frequence - RF - electrodes, the RF electrodes are configured to directly modulate each gain section so as to code payload signals on each wavelength of the comb of wavelengths.
